# EUROPÄISCHE PATENTSCHRIFT

(11) **EP 3 418 096 B1**
(45) Veröffentlichungstag und Bekanntmachung des Hinweises auf die Patenterteilung: **26.06.2019**
(21) Anmeldenummer: 18174668.6
(22) Anmeldetag: 29.05.2018
(51) Int. Cl.: B60K 15/04, B60K 13/04, B60K 15/035

(54) **BEFÜLLKOPF FÜR EINEN FLÜSSIGKEITSTANK**
FILLING HEAD FOR A LIQUID TANK
TÊTE DE REMPLISSAGE POUR UN RÉSERVOIR DE LIQUIDE

(30) Priorität: 22.06.2017 DE 102017113822
(43) Veröffentlichungstag der Anmeldung: 26.12.2018
(73) Patentinhaber: VERITAS AG, 63571 Gelnhausen (DE)
(72) Erfinder: HARTMANN, Thomas, 63571 Gelnhausen (DE); IMSIC, Zlatan, 63619 Bad Orb (DE); LUKOSCHEK, Oliver, 63589 Linsengericht (DE); WILHELMI, Oliver, 63589 Linsengericht (DE)
(74) Vertreter: Patentship Patentanwaltsgesellschaft mbH

(56) Entgegenhaltungen:
- EP-A1- 2 719 567
- WO-A1-2013/034266
- WO-A2-2014/028500
- DE-A1- 19 903 545
- DE-A1-102014 225 119
- DE-A1-102016 014 051

## Beschreibung

Die vorliegende Erfindung betrifft einen Befüllkopf für einen Flüssigkeitstank in einem Fahrzeug.

In herkömmlichen Fahrzeugen werden oftmals abgegebene Abgase im Rahmen eines Abgasreinigungsverfahrens mittels selektiver katalytischer Reduktion (SCR) gereinigt, wobei hierbei wässrige Harnstofflösung dem Abgasstrang zugeführt wird. Um die dafür benötige Harnstofflösung aufzunehmen weisen herkömmliche Fahrzeuge Flüssigkeitstanks, insbesondere Harnstofftanks, auf. Bei der Betankung eines Flüssigkeitstanks mit einer wässrigen Harnstofflösung wird die Flüssigkeit oftmals mit einer Befüllgeschwindigkeit von bis zu 40 l/min zugeführt. Hierbei soll vermieden werden, dass während des Betankungsvorgangs Flüssigkeit aus einem Befüllkopf austritt und das Äußere des Fahrzeugs oder die Umwelt verschmutzt.

Die Druckschrift DE 10 2011 009 745 A1 beschreibt in diesem Zusammenhang einen Einfüllstutzen für einen Nebenflüssigkeitsbehälter für ein Fahrzeug.

Die Druckschrift DE 10 2016 014 051 A1 beschreibt einen SCR-Katalysatortank mit einem Vorratsbehälter und einen in den Vorratsbehälter mündenden Einfüllstutzen.

Die Druckschrift WO 2014/028500 A2 beschreibt eine Führungsvorrichtung für eine Zapfpistole, welche in einen Einfüllstutzen eingeführt wird.

Die Druckschrift EP 2 719 567 A1 beschreibt einen Befüllkopf für einen Flüssigkeitstank, in welchen eine Befülldüse einführbar ist.

Die Druckschrift DE 10 2014 225 119 A1 beschreibt einen Füllstutzen für Harnstoff.

Die Druckschrift DE 199 03 545 A1 beschreibt einen Einfüllkanal in einem Kraftstofftank mit einem Aufnahmebereich für das Zapfrohrende.

Die Druckschrift WO 2013/034266 A1 beschreibt einen Befüllkopf für einen Fahrzeugbehälter.

Es ist die der Erfindung zugrundeliegende Aufgabe, einen verbesserten Befüllkopf anzugeben, bei dem ein Austreten von Flüssigkeit beim Betanken wirksam verhindert werden kann.

Diese Aufgabe wird durch den Gegenstand mit den Merkmalen nach dem unabhängigen Anspruch gelöst. Vorteilhafte Ausführungsformen der Erfindung sind Gegenstand der Figuren, der Beschreibung und der abhängigen Ansprüche.

Gemäß einem Aspekt der Erfindung wird die Aufgabe durch einen Befüllkopf gemäss Anspruch 1 gelöst.

Durch den abgewinkelten Auslassstutzen des Gehäuses des Befüllkopfes kann insbesondere bei einer vorgegebenen und/oder beengten Bauraumsituation in dem Fahrzeug eine hohe Flexibilität bei der Anordnung des Befüllkopfes und der fluidtechnischen Verbindung zwischen dem Befüllkopf und dem Flüssigkeitstank sichergestellt werden.

Durch das Dichtungslabyrinth wird beispielsweise der technische Vorteil erreicht, dass durch das Einführen des Dichtungsvorsprungs des Verbindungsstutzens in die Dichtungsaufnahme des Gehäuses eine besonders vorteilhafte fluidtechnische Abdichtung sichergestellt werden kann, ohne weitere Dichtungselemente verwenden zu müssen.

Der abgewinkelte Auslassabschnitt des Verbindungsstutzens ist hierbei in den abgewinkelten Auslassstutzen des Gehäuses zumindest teilweise eingeführt, wobei durch den Verbindungsstutzen geleitete Flüssigkeit durch den abgewinkelten Auslassabschnitt besonders wirksam in den abgewinkelten Auslassstutzen umgeleitet werden kann. Hierdurch kann verhindert werden, dass es bei hohen Befüllgeschwindigkeiten zu einem Rückstau von Flüssigkeit in dem abgewinkelten Auslassstutzen kommt.

Durch den Befüllkopf können hohe Befüllgeschwindigkeiten von bis zu 40 l/min ermöglicht werden, ohne dass es zu einem Austritt von Flüssigkeit kommt. Zudem können eine Vielzahl von unterschiedlichen Zapfventilen von unterschiedlichen Herstellern mit unterschiedlichen Befüllgeschwindigkeiten verwendet werden und eine Vorfüllung des Befüllkopfes kann verhindert werden.

In einer vorteilhaften Ausführungsform des Befüllkopfes weist das zweite Gehäuseteil einen Entlüftungsstutzen zum Einleiten von Luft in ein Inneres des Gehäuses auf, wobei der Entlüftungsstutzen insbesondere als ein abgewinkelter Entlüftungsstutzen ausgebildet ist.

Dadurch wird beispielsweise der technische Vorteil erreicht, dass durch den Entlüftungsstutzen aus dem Flüssigkeitstank verdrängte Luft besonders vorteilhaft aus dem Befüllkopf geleitet werden kann.

In einer vorteilhaften Ausführungsform des Befüllkopfes erstreckt sich der abgewinkelte Entlüftungsstutzen, der abgewinkelte Auslassabschnitt und/oder der abgewinkelte Auslassstutzen gegenüber einer Längsachse des Verbindungsstutzens abgewinkelt.

Dadurch wird beispielsweise der technische Vorteil erreicht, dass die abgewinkelte Anordnung des Entlüftungsstutzens, des Auslassabschnitts und/oder des Auslassstutzens eine besonders vorteilhafte Bauraum-optimierte Anordnung des Befüllkopfes in dem Fahrzeug sicherstellt.

In einer vorteilhaften Ausführungsform des Befüllkopfes weist der Verbindungsstutzen zumindest eine Entlüftungsöffnung zum Ausleiten von Luft aus dem Verbindungsstutzen auf, wobei die Entlüftungsöffnung insbesondere an einer Seitenwandung des Verbindungsstutzens gebildet ist.

Dadurch wird beispielsweise der technische Vorteil erreicht, dass durch die Entlüftungsöffnung ein aus dem Flüssigkeitstank verdrängtes Flüssigkeits-Luft-Gemisch strömen und dadurch vorteilhaft in dem Inneren des Gehäuses des Befüllkopfes aufgenommen werden kann.

In einer vorteilhaften Ausführungsform des Befüllkopfes weist der Verbindungsstutzen zumindest eine Längsrippe auf, welche sich an einer Außenseite des Verbindungsstutzens zumindest abschnittsweise entlang einer Längsachse des Verbindungsstutzens erstreckt, und wobei die zumindest eine Entlüftungsöffnung in der Längsrippe gebildet ist.

Dadurch wird beispielsweise der technische Vorteil erreicht, dass die zumindest eine Längsrippe eine vorteilhafte Stabilisierung des Verbindungsstutzens sicherstellt, und dass durch die Anordnung der Entlüftungsöffnung in der Längsrippe ein besonders vorteilhaftes Ausleiten eines Flüssigkeits-Luft-Gemisches aus dem Verbindungsstutzen ermöglicht wird.

In einer vorteilhaften Ausführungsform des Befüllkopfes ist der Dichtungsvorsprung mit der Dichtungsaufnahme formschlüssig verbunden,
um eine fluidtechnische Abdichtung zwischen dem Verbindungsstutzen und dem zweiten Gehäuseteil sicherzustellen.

In einer vorteilhaften Ausführungsform des Befüllkopfes ist zwischen dem Dichtungsvorsprung und der Dichtungsaufnahme zumindest ein Dichtungselement angeordnet, wobei das Dichtungselement insbesondere einen O-Ring und/oder Dichtungslamellen umfasst.

Dadurch wird beispielsweise der technische Vorteil erreicht, dass durch das zusätzliche Anordnen eines O-Rings und/oder von Dichtungslamellen die Dichtungswirkung der fluidtechnischen Abdichtung weiter verbessert werden kann.

In einer vorteilhaften Ausführungsform des Befüllkopfes weist das erste Gehäuseteil oder das zweite Gehäuseteil einen Einführabschnitt auf, welcher in einen Aufnahmeabschnitt des zweiten Gehäuseteils oder des ersten Gehäuseteils einführbar ist, um das erste Gehäuseteil und das zweite Gehäuseteil miteinander zu verbinden.

Dadurch wird beispielsweise der technische Vorteil erreicht, dass das erste und zweite Gehäuseteil wirksam miteinander verbunden sind, und dadurch den durch die beiden Gehäuseteile begrenzten Gehäuseinnenraum wirksam abdichten.

In einer vorteilhaften Ausführungsform des Befüllkopfes ist der Verbindungsstutzen als ein Hohlzylinder oder ein Hohlkonus gebildet.

Dadurch wird beispielsweise der technische Vorteil erreicht, dass Flüssigkeit durch den Hohlzylinder oder Hohlkonus wirksam geleitet werden kann.

In einer vorteilhaften Ausführungsform des Befüllkopfes umfasst der Befüllkopf einen Ringmagneten, welcher ausgebildet ist, eine Zapfventilautomatik des Zapfventils freizugeben, wobei der Ringmagnet insbesondere aus einem magnetischen Kunststoffmaterial oder einem magnetischen Metall, wie z.B. Neodym oder Eisen, gebildet ist.

Dadurch wird beispielsweise der technische Vorteil erreicht, dass durch die magnetische Wechselwirkung zwischen dem Ringmagneten und der Zapfventilautomatik des Zapfventils sichergestellt wird, dass die Zapfventilautomatik nur freigegeben wird, wenn das passende Zapfventil in den Befüllkopf eingeführt worden ist, wodurch eine Fehlbetankung des Flüssigkeitstanks verhindert werden kann. Ein aus einem magnetischen Kunststoffmaterial gebildeter Ringmagnet kann besonders vorteilhaft geformt werden. Die magnetischen Eigenschaften des Kunststoffmaterials können insbesondere durch magnetische Partikel in dem Kunststoff sichergestellt werden, wobei die magnetischen Partikel insbesondere Eisenpartikel oder Seltene Erd-Partikel, wie z.B. Neodym-Partikel, umfassen können. Durch ein magnetisches Metall, wie z.B. Neodym oder Eisen, kann ebenfalls ein wirksamer Ringmagnet gebildet werden.

In einer vorteilhaften Ausführungsform des Befüllkopfes ist der Ringmagnet zwischen dem ersten Gehäuseteil und dem Verbindungsstutzen angeordnet, wobei der Ringmagnet eine Magnetöffnung aufweist, wobei das Zapfventil durch die Magnetöffnung in die Aufnahme des Verbindungsstutzens einführbar ist, und wobei der Ringmagnet insbesondere als ein in Richtung des ersten Gehäuseteils konisch zulaufender Ringmagnet ausgebildet ist.

Dadurch wird beispielsweise der technische Vorteil erreicht, dass der Ringmagnet wirksam in dem Befüllkopf angeordnet werden kann. Wenn das Zapfenventil durch die Magnetöffnung geführt wird, kann der Ringmagnet die Zapfventilautomatik des Zapfventils wirksam freigeben. Ein in Richtung des ersten Gehäuseteils konisch zulaufender Ringmagnet kann besonders vorteilhaft in der gewünschten Polarisationsrichtung des Ringmagneten zwischen dem ersten Gehäuseteil und dem Verbindungsstutzen innerhalb des Befüllkopfes angeordnet werden.

In einer vorteilhaften Ausführungsform des Befüllkopfes weist der Befüllkopf einen Dichtungsring auf, wobei der Dichtungsring zwischen dem Ringmagnet und dem ersten Gehäuseteil angeordnet ist, wobei der Dichtungsring eine Dichtungsöffnung aufweist, und wobei das Zapfventil durch die Dichtungsöffnung in die Aufnahme des Verbindungsstutzens einführbar ist.

Dadurch wird beispielsweise der technische Vorteil erreicht, dass der Dichtungsring eine wirksame fluidtechnische Abdichtung sicherstellt, so dass beim Einfüllen von Flüssigkeit in den Befüllkopf die Flüssigkeit nicht unkontrolliert austritt.

In einer vorteilhaften Ausführungsform des Befüllkopfes ist an einer dem ersten Gehäuseteil zugewandten Seite des Verbindungsstutzens ein Befestigungsabschnitt gebildet, wobei der Befestigungsabschnitt geformt ist, den Ringmagneten zwischen dem Verbindungsstutzen und dem ersten Gehäuseteil zu befestigen.

Dadurch wird beispielsweise der technische Vorteil erreicht, dass der Befestigungsabschnitt sicherstellt, dass der Ringmagnet wirksam zwischen dem Verbindungsstutzen und dem ersten Gehäuseteil fixiert ist.

In einer vorteilhaften Ausführungsform des Befüllkopfes weist der Befestigungsabschnitt eine umlaufende Auflagefläche auf, welche an einer Unterseite des Ringmagneten anliegt.

Dadurch wird beispielsweise der technische Vorteil erreicht, dass die umlaufende Auflagefläche des Befestigungsabschnitts sicherstellt, dass der Ringmagnet wirksam zwischen dem Verbindungsstutzen und dem ersten Gehäuseteil fixiert ist.

In einer vorteilhaften Ausführungsform des Befüllkopfes ist an einer Außenseite des Verbindungsstutzens ein flächiges Element, insbesondere ein Schwallblech, gebildet, wobei das flächige Element an dem ersten Gehäuseteil anliegt, um den Verbindungsstutzen an dem ersten Gehäuseteil zu positionieren.

Dadurch wird beispielsweise der technische Vorteil erreicht, dass eine vorteilhafte Positionierung des Verbindungsstutzens in dem Gehäuse sichergestellt ist.

Ausführungsbeispiele der Erfindung sind in den Zeichnungen dargestellt und werden im Folgenden näher beschrieben.

Es zeigen:
- Fig. 1: eine perspektivische Außenansicht eines Befüllkopfes;
- Figs. 2, 3: Seitenansichten eines Verbindungsstutzens eines Befüllkopfes; und
- Fig. 4: eine Seitenansicht eines Verbindungsstutzens in einem Befüllkopf.

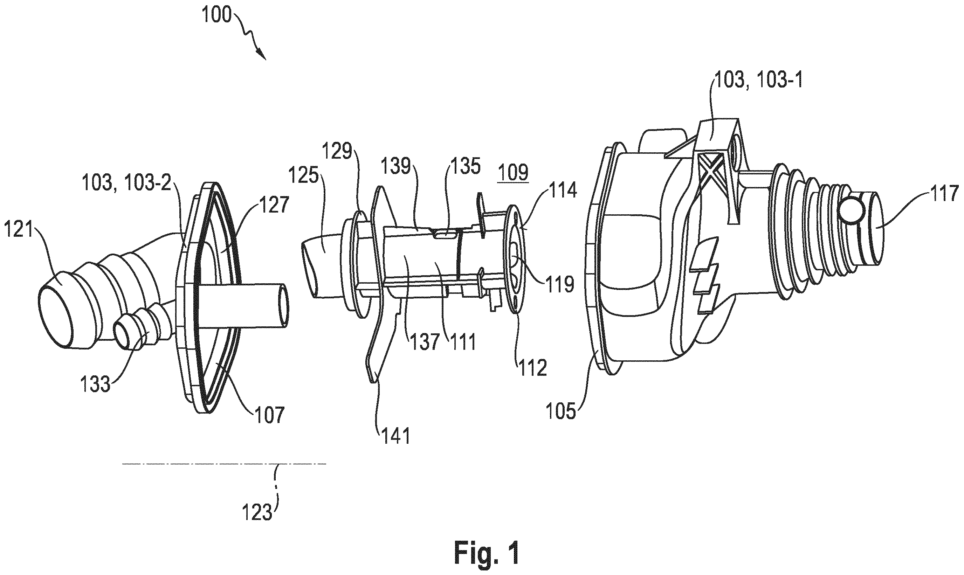

Fig. 1 zeigt eine perspektivische Außenansicht eines Befüllkopfes 100 in einer Explosionsdarstellung.

Der Befüllkopf 100 weist ein Gehäuse 103 auf, das aus einem ersten Gehäuseteil 103-1 und einem zweiten Gehäuseteil 103-2 zusammengesetzt ist. Das erste Gehäuseteil 103-1 ist hierbei mit dem zweiten Gehäuseteil 103-2 verbunden. Das erste Gehäuseteil 103-1 weist einen Einführabschnitt 105 auf, welcher in einen Aufnahmeabschnitt 107 des zweiten Gehäuseteils 103-2 eingeführt wird, um das erste Gehäuseteil 103-1 mit dem zweiten Gehäuseteil 103-2, insbesondere formschlüssig und/oder stoffschlüssig, zu verbinden.

Der Befüllkopf 100 weist ferner einen Verbindungsstutzen 111 auf, welcher innerhalb des Gehäuses 103 zwischen dem ersten Gehäuseteil 103-1 und dem zweiten Gehäuseteil 103-2 angeordnet ist, und welcher insbesondere als ein Hohlzylinder oder als ein Hohlkonus ausgebildet ist.

Zwischen dem Verbindungsstutzen 111 und dem ersten Gehäuseteil 103-1 ist ein in Fig. 1 nicht gezeigter Ringmagnet 113 angeordnet. Der Ringmagnet 113 umfasst insbesondere ein magnetisches Kunststoffmaterial, insbesondere ein Kunststoffmaterial, in dem magnetische Füllstoffe, wie z.B. Eisenpartikel, und/oder Seltene Erd-Partikel, insbesondere Neodym-Partikel, aufgenommen sind. Der Ringmagnet 113 kann alternativ aus einem magnetischen Metall, wie z.B. Eisen und/oder Neodym bestehen. Der Ringmagnet 113 weist eine Magnetöffnung auf, durch welche ein in Fig. 1 nicht dargestelltes Zapfventil zum Befüllen eines Flüssigkeitstanks in den Befüllkopf 100 eingeführt werden kann. Der Ringmagnet 113 ist ausgebildet, eine Zapfventilautomatik des Zapfventils freizugeben, damit Flüssigkeit aus dem Zapfventil durch den Befüllkopf 100 in den Flüssigkeitstank geleitet werden kann. Der Ringmagnet 113 ist hierbei insbesondere als ein in Richtung des ersten Gehäuseteils 103-1 konisch zulaufender Ringmagnet 113 ausgebildet.

An einer dem ersten Gehäuseteil 103-1 zugewandten Seite des Verbindungsstutzens 111 ist ein Befestigungsabschnitt 112 gebildet, wobei der Befestigungsabschnitt 112 geformt ist, den Ringmagneten 113 wirksam zwischen dem Verbindungsstutzen 111 und dem ersten Gehäuseteil 103-1 zu befestigen. Hierbei liegt insbesondere eine umlaufende Auflagefläche 114 des Befestigungsabschnitt 112 an einer in Fig. 1 nicht gezeigten Unterseite des Ringmagneten 113 an.

Zwischen dem Ringmagnet 113 und dem ersten Gehäuseteil 103-1 ist ein in Fig. 1 nicht dargestellter Dichtungsring 115 angeordnet. Der Dichtungsring 115 weist eine Dichtungsöffnung auf, durch welche das Zapfventil geführt werden kann. Der Dichtungsring 115 stellt eine wirksame flüssigkeitsdichte Abdichtung des Gehäuseinnenraums 109 sicher und gewährleistet, dass keine Flüssigkeit aus dem Befüllkopf 100 unkontrolliert entweichen kann.

Zum Betanken eines Flüssigkeitstanks in einem Fahrzeug wird ein in Fig. 1 nicht dargestelltes Zapfventil in eine Aufnahmeöffnung 117 des ersten Gehäuseteils 103-1 des Befüllkopfes 100 eingeführt und durch eine Aufnahme 119 in dem Verbindungsstutzen 111 in den Verbindungsstutzen 111 eingeführt und anschließend betätigt. Durch das Zapfventil geförderte Flüssigkeit fließt dann aus dem Zapfventil in den Befüllkopf 100 und insbesondere in den Verbindungsstutzen 111, welcher wiederum ausgebildet ist, die eingeführte Flüssigkeit zu leiten.

Im dem zweiten Gehäuseteil 103-2 ist ein abgewinkelter Auslassstutzen 121 gebildet, durch den beim Betanken die Flüssigkeit in Richtung des Flüssigkeitstanks ausgelassen werden kann. Zu diesem Zweck ist an dem Auslassstutzen 121 beispielsweise ein in Fig. 1 nicht gezeigter Schlauch oder eine Flüssigkeitsleitung aufgesteckt, welche mit dem Flüssigkeitstank verbunden ist.

Hierbei ist der Flüssigkeitstank insbesondere als ein Harnstofftank zur Aufnahme einer wässrigen Harnstofflösung ausgebildet, wobei die darin aufgenommene Harnstofflösung in einem Abgasreinigungsverfahren der selektiven katalytischen Reduktion (SCR) eingesetzt wird.

Hierbei erstreckt sich der abgewinkelte Auslassstutzen 121 insbesondere gegenüber einer Längsachse 123 des Verbindungsstutzens 111 abgewinkelt. Der abgewinkelt angeordnete Auslassstutzen 121 ermöglicht eine winklige Abführung der Flüssigkeit und stellt dadurch eine vorteilhafte Flexibilität bei der räumlichen Ausgestaltung der fluidtechnischen Anbindung zwischen dem Befüllkopf 100 und dem Flüssigkeitstank sicher. Besonders bei beengten Bauraumsituationen kann somit der Befüllkopf 100 und die fluidtechnische Verbindung zu dem Flüssigkeitstank platzsparend und vorteilhaft verbaut werden.

Damit der durch die Zapfpistole abgegebene Flüssigkeitsstrahl vorteilhaft in den abgewinkelten Auslassstutzen 121 geleitet werden kann, weist der Verbindungsstutzen 111 einen abgewinkelten Auslassabschnitt 125 auf, welcher zumindest teilweise in den Auslassstutzen 121 des zweiten Gehäuseteils 103-2 eingeführt ist. Der abgewinkelte Auslassabschnitt 125 ist hierbei ebenfalls wie der abgewinkelte Auslassstutzen 121 gegenüber der Längsachse 123 des Verbindungsstutzens 111 abgewinkelt.

Durch den abgewinkelten Auslassabschnitt 125 des Verbindungsstutzens 111, welcher zumindest abschnittsweise in den Auslassstutzen 121 eingeführt ist, wird der durch die Zapfpistole in den Verbindungsstutzen 111 abgegebene und durch den Verbindungsstutzen 111 geleitete Flüssigkeitsstrahl besonders vorteilhaft in den Auslassstutzen 121 umgelenkt. Dadurch lassen sich Verwirbelungen der Flüssigkeit in dem Übergangsbereich zwischen dem Verbindungsstutzen 111 und dem Auslassstutzen 121 vermeiden, wodurch ein nicht gewünschter Rückstau von Flüssigkeit in dem Auslassstutzen 121 verhindert werden kann, und wodurch eine nicht gewünschte Frühabschaltung des Zapfventils vermieden werden kann.

Um eine wirksame fluidtechnische Abdichtung zwischen dem Verbindungsstutzen 111 und dem zweiten Gehäuseteil 103-2 sicherzustellen, ist an dem zweiten Gehäuseteil 103-2 eine Dichtungsaufnahme 127 gebildet, und ist an einer Außenseite des Verbindungsstutzens 111 ein Dichtungsvorsprung 129 gebildet. Der Dichtungsvorsprung 129 wird hierbei, insbesondere formschlüssig, mit der Dichtungsaufnahme 127 verbunden, um eine wirksame fluidtechnische Abdichtung bereitzustellen. Somit kann durch die fluidtechnische Abdichtung verhindert werden, dass während des Tankvorgangs aus dem Flüssigkeitstank verdrängte, insbesondere aufspritzende, Flüssigkeit an der Verbindung zwischen dem zweiten Gehäuseteil 103-2 und dem Verbindungsstutzen 111 in das Innere des Gehäuses 103 gelangt.

Um eine wirksame fluidtechnische Abdichtung sicherzustellen, kann neben der insbesondere formschlüssigen Verbindung zwischen dem Dichtungsvorsprung 129 und der Dichtungsaufnahme 127 ferner zumindest ein Dichtungselement 131, insbesondere ein O-Ring und/oder Dichtungslamellen zwischen dem Dichtungsvorsprung 129 und der Dichtungsaufnahme 127 angeordnet werden.

Ferner ist in dem zweiten Gehäuseteil 103-2 ein Entlüftungsstutzen 133 gebildet. Durch den Entlüftungsstutzen 133 wird in den Befüllkopf 100 das Luftvolumen eingeleitet, das beim Zuführen von Flüssigkeit in den Flüssigkeitstank aus dem Flüssigkeitstank verdrängt wird, damit dieses dann über die Aufnahmeöffnung 117 des Befüllkopfes 100 ausgeleitet werden kann. Zu diesem Zweck ist beispielsweise ein in Fig. 1 nicht gezeigter Entlüftungsschlauch an dem Entlüftungsstutzen 133 angeschlossen, wobei der Entlüftungsschlauch fluidtechnisch mit dem Flüssigkeitstank verbunden ist. Die Aufnahmeöffnung 117 ist derart ausgebildet, dass bei einem in die Aufnahmeöffnung 117 aufgenommenen Zapfventil ein Entlüftungskanal um das Zapfventil herum entsteht. Dies wird beispielsweise durch ein Nutprofil erreicht, welches ein Inneres der Aufnahmeöffnung 117 umläuft. Der Entlüftungskanal im Inneren des Befüllkopfes 100 ist derart gestaltet, dass selbst bei einer Befüllgeschwindigkeit der Flüssigkeit von 40 l/min ebenfalls Luft mit einer Befüllgeschwindigkeit von 40 l/min durch den Befüllkopf 100 entweichen kann.

Der insbesondere abgewinkelte Entlüftungsstutzen 133 erstreckt sich in der gleichen Richtung wie der Auslassstutzen 121, so dass ein raumsparender Einbau des Befüllkopfes 100 innerhalb des Fahrzeuges ermöglicht wird. Anschlussleitungen für den Entlüftungsstutzen 133 und den Auslassstutzen 121 können dann von der gleichen Richtung her aufgesteckt werden.

Der Verbindungsstutzen 111 weist zumindest eine Entlüftungsöffnung 135 auf, welche ausgebildet ist, aus dem Flüssigkeitstank verdrängte Luft auszuleiten. Hierbei ist die Entlüftungsöffnung 135 insbesondere an einer Seitenwandung 137 des Verbindungsstutzens 111 angeordnet. Der Verbindungsstutzen 111 weist hierbei insbesondere zumindest eine Längsrippe 139 auf, welche sich an der Außenseite des Verbindungsstutzens 111 zumindest abschnittsweise entlang der Längsrichtung 123 des Verbindungsstutzens 111 erstreckt. Hierbei ist die Entlüftungsöffnung 135 insbesondere an der Seitenwandung 137 in der Längsrippe 139 gebildet.

Wenn bei hohen Befüllgeschwindigkeiten ein Flüssigkeits-Luft-Gemisch aus dem Flüssigkeitstank verdrängt wird, kann das aufsteigende Flüssigkeits-Luft-Gemisch durch die zumindest eine Entlüftungsöffnung 135 in das Innere des Gehäuses 103 entweichen, so dass verhindert wird, dass das Flüssigkeits-Luft-Gemisch durch die Aufnahmeöffnung 117 in Richtung des Bedieners des Zapfventils entweichen kann.

Die Gehäuseteile 103-1, 103-2 und der Verbindungsstutzen 111 sind beispielsweise Kunststoff- oder Spritzgussformteile aus Polyamid (PA), Polyoxymethylen (POM), Polyolefin oder thermoplastischen Elastomeren auf Olefinbasis. Die Fertigung der Gehäuseteile 103-1, 103-2 und des Verbindungsstutzens 111 aus diesen Materialien ist besonders vorteilhaft, da hierdurch eine hohe Festigkeit und Stabilität des Befüllkopfes 100 erreicht wird.

Ferner weist der Verbindungsstutzen 111 noch ein flächiges Element 141, insbesondere ein Schwallblech, auf, wobei das flächige Element 141 an dem erste Gehäuseteil 103-1 anliegt, um den Verbindungsstutzen 111 an dem ersten Gehäuseteil 103-1 zu positionieren.

Durch den Befüllkopf 100 wird die sachgerechte Befüllung des Flüssigkeitstanks mit hohen Befüllgeschwindigkeiten von bis zu 40 l/min sichergestellt werden. Das Befüllen des Flüssigkeitstanks ist mit unterschiedlichen Typen von Zapfpistolen von unterschiedlichen Herstellern mit unterschiedlichem Befüllverhalten und unterschiedlichen Befüllgeschwindigkeiten möglich. Durch die fluidtechnische Abdichtung zwischen dem ersten Gehäuseteil 103-1 und dem Verbindungsstutzen 111 wird eine Vorfüllung des Befüllkopfes 100 verhindert und es können eine Vielzahl von Nachtankschritten durchgeführt werden, ohne dass es zu einer Abschaltung des Zapfventils kommt.

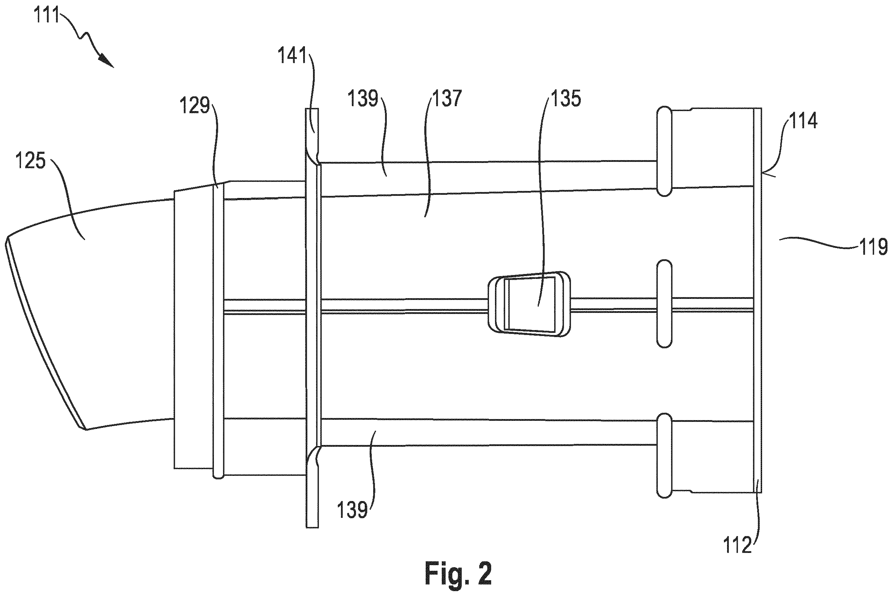

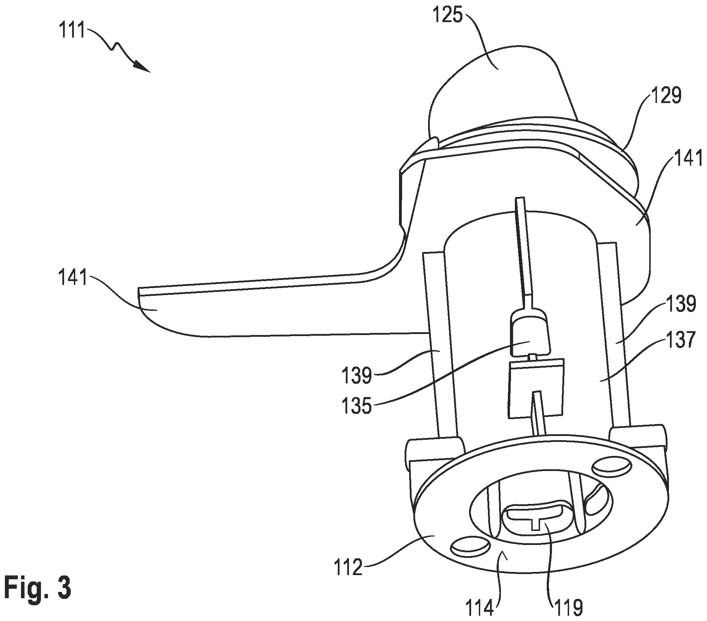

Die Figuren 2 und 3 zeigen unterschiedliche Seitenansichten eines Verbindungsstutzens 111 eines Befüllkopfes 100. Der Verbindungsstutzen 111 weist eine Aufnahme 119 zur Aufnahme eines Zapfventils auf und ist ausgebildet aus einem Zapfventil zugeführte Flüssigkeit in Richtung eines abgewinkelten Auslassstutzens 121 des Befüllkopfes 100 zu leiten. Um die Flüssigkeit wirksam umzuleiten, weist der Verbindungsstutzen 111 einen abgewinkelten Auslassabschnitt 125 auf.

Um eine wirksame fluidtechnische Abdichtung zwischen dem Verbindungsstutzen 111 und dem Gehäuse 103 sicherzustellen, ist an einer Außenseite des Verbindungsstutzens 111 ein Dichtungsvorsprung 129 gebildet. Der Dichtungsvorsprung 129 wird hierbei, insbesondere formschlüssig, mit einer in den Figuren 2 und 3 nicht dargestellten Dichtungsaufnahme 127 des zweiten Gehäuseteils 103-2 verbunden, um eine wirksame fluidtechnische Abdichtung bereitzustellen.

Der Verbindungsstutzen 111 weist an einer Seitenwandung 137 zumindest eine Entlüftungsöffnung 135 auf, welche ausgebildet ist, aus dem Flüssigkeitstank verdrängte Luft, bzw. ein verdrängtes Luft-Flüssigkeits-Gemisch, auszuleiten. Hierbei ist die Entlüftungsöffnung 135 insbesondere an der Seitenwandung 137 in einer Längsrippe 139 gebildet.

An einer dem ersten Gehäuseteil 103-1 zugewandten Seite des Verbindungsstutzens 111 ist ein Befestigungsabschnitt 112 gebildet, wobei der Befestigungsabschnitt 112 geformt ist, einen in den Figuren 2 und 3 nicht gezeigten Ringmagneten 113 wirksam zwischen dem Verbindungsstutzen 111 und dem ersten Gehäuseteil 103-1 zu befestigen. Hierbei liegt insbesondere eine umlaufende Auflagefläche 114 des Befestigungsabschnitts 112 an einer in den Figuren 2 und 3 nicht gezeigten Unterseite des Ringmagneten 113 an.

Ferner weist der Verbindungsstutzen 111 ein flächiges Element 141, insbesondere ein Schwallblech, auf, wobei das flächige Element 141 an dem ersten Gehäuseteil 103-1 anliegt, um den Verbindungsstutzen 111 an dem ersten Gehäuseteil 103-1 zu positionieren.

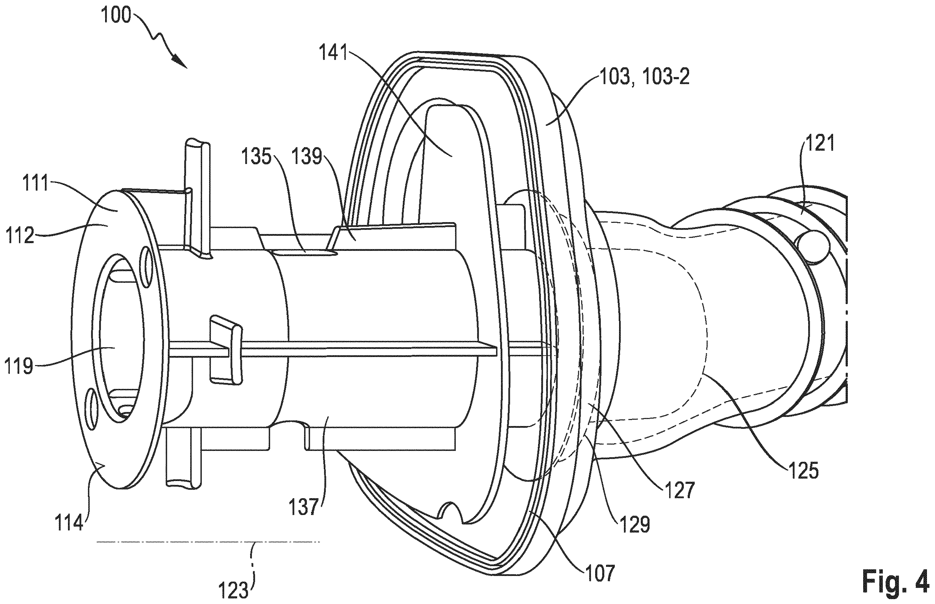

Fig. 4 zeigt eine Seitenansicht eines Verbindungsstutzens 111 in einem Befüllkopf 100. In der in Fig. 4 gezeigten Ansicht ist der Verbindungsstutzen 111 gezeigt, welcher in ein zweites Gehäuseteil 103-2 des Gehäuses 103 eingeführt ist.

Hierbei weist das zweite Gehäuseteil 103-2 einen abgewinkelten Auslassstutzen 121 auf, in welchen ein abgewinkelter Auslassabschnitt 125 des Verbindungsstutzens 111 zumindest teilweise eingeführt ist, um durch den Verbindungsstutzen 111 geleitete Flüssigkeit wirksam in Richtung des Auslassstutzens 121 umzulenken.

Um eine wirksame fluidtechnische Abdichtung zwischen dem Verbindungsstutzen 111 und dem zweiten Gehäuseteil 103-2 sicherzustellen, ist in Dichtungsvorsprung 129 des Verbindungsstutzens 111 mit einer Dichtungsaufnahme 127 des zweiten Gehäuseteils 103-2, insbesondere formschlüssig, verbunden.

Der Verbindungsstutzen 111 weist an einer Seitenwandung 137 zumindest eine Entlüftungsöffnung 135 auf, welche ausgebildet ist, aus dem Flüssigkeitstank verdrängte Luft, bzw. ein verdrängtes Luft-Flüssigkeits-Gemisch, auszuleiten. Hierbei ist die Entlüftungsöffnung 135 insbesondere an der Seitenwandung 137 in einer Längsrippe 139 gebildet.

An einer dem ersten Gehäuseteil 103-1 zugewandten Seite des Verbindungsstutzens 111 ist ein Befestigungsabschnitt 112 gebildet, wobei der Befestigungsabschnitt 112 geformt ist, einen in den Figuren 2 und 3 nicht gezeigten Ringmagneten 113 wirksam zwischen dem Verbindungsstutzen 111 und dem ersten Gehäuseteil 103-1 zu befestigen. Hierbei liegt insbesondere eine umlaufende Auflagefläche 114 des Befestigungsabschnitts 112 an einer in den Figuren 2 und 3 nicht gezeigten Unterseite des Ringmagneten 113 an.

Ferner weist der Verbindungsstutzen 111 noch ein flächiges Element 141, insbesondere ein Schwallblech, auf, wobei das flächige Element 141 an dem ersten Gehäuseteil 103-1 anliegt, um den Verbindungsstutzen 111 an dem ersten Gehäuseteil 103-1 zu positionieren.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Der Schutzbereich der vorliegenden Erfindung ist durch die Ansprüche gegeben und wird durch die in der Beschreibung erläuterten oder den Figuren gezeigten Merkmale nicht beschränkt.

### BEZUGSZEICHENLISTE

- 100: Befüllkopf
- 103: Gehäuse
- 103-1: Erstes Gehäuseteil
- 103-2: Zweites Gehäuseteil
- 105: Einführabschnitt
- 107: Aufnahmeabschnitt
- 109: Gehäuseinnenraum
- 111: Verbindungsstutzen
- 112: Befestigungsabschnitt
- 113: Ringmagnet
- 114: Umlaufende Auflagefläche
- 115: Dichtungsring
- 117: Aufnahmeöffnung
- 119: Aufnahme
- 121: Auslassstutzen
- 123: Längsachse des Verbindungsstutzens
- 125: Abgewinkelter Auslassabschnitt
- 127: Dichtungsaufnahme
- 129: Dichtungsvorsprung
- 131: Dichtungselement
- 133: Entlüftungsstutzen
- 135: Entlüftungsöffnung
- 137: Seitenwandung des Verbindungsstutzens
- 139: Längsrippen
- 141: Flächiges Element

## Patentansprüche

1. Befüllkopf (100) für einen Flüssigkeitstank in einem Fahrzeug mit:
einem Gehäuse (103), das ein erstes Gehäuseteil (103-1) und ein zweites Gehäuseteil (103-2) aufweist, welche miteinander verbunden sind, wobei in dem ersten Gehäuseteil (103-1) eine Aufnahmeöffnung (117) gebildet ist, wobei in die Aufnahmeöffnung (117) ein Zapfventil zum Einlassen von Flüssigkeit einführbar ist, und wobei in dem zweiten Gehäuseteil (103-2) ein abgewinkelter Auslassstutzen (121) zum Auslassen der zugeführten Flüssigkeit in den Flüssigkeitstank gebildet ist; und
einem Verbindungsstutzen (111) zum Leiten der Flüssigkeit, wobei der Verbindungsstutzen (111) in dem Gehäuse (103) zwischen dem ersten Gehäuseteil (103-1) und dem zweiten Gehäuseteil (103-2) angeordnet ist, wobei der Verbindungsstutzen (111) eine Aufnahme (119) zum Aufnehmen des Zapfventils aufweist, wobei der Verbindungsstutzen (111) ferner einen abgewinkelten Auslassabschnitt (125) aufweist, welcher in den abgewinkelten Auslassstutzen (121) des zweiten Gehäuseteils (103-2) zumindest teilweise eingeführt ist,
wobei in dem zweiten Gehäuseteil (103-2) eine Dichtungsaufnahme (127) gebildet ist, wobei an einer Außenseite des Verbindungsstutzens (111) ein Dichtungsvorsprung (129) gebildet ist, wobei der Dichtungsvorsprung (129) mit der Dichtungsaufnahme (127) verbindbar ist, um ein Dichtungslabyrinth zu bilden und um eine fluidtechnische Abdichtung zwischen dem Verbindungsstutzen (111) und dem zweiten Gehäuseteil (103-2) sicherzustellen.

2. Befüllkopf (100) nach Anspruch 1, wobei das zweite Gehäuseteil (103-2) einen Entlüftungsstutzen (133) zum Einleiten von Luft in ein Inneres des Gehäuses (103) aufweist, wobei der Entlüftungsstutzen (133) insbesondere als ein abgewinkelter Entlüftungsstutzen (133) ausgebildet ist.

3. Befüllkopf (100) nach Anspruch 1 oder 2, wobei sich der abgewinkelte Entlüftungsstutzen (133), der abgewinkelte Auslassabschnitt (125) und/oder der abgewinkelte Auslassstutzen (121) gegenüber einer Längsachse (123) des Verbindungsstutzens (111) abgewinkelt erstreckt.

4. Befüllkopf (100) nach einem der vorangehenden Ansprüche, wobei der Verbindungsstutzen (111) zumindest eine Entlüftungsöffnung (135) zum Ausleiten von Luft aus dem Verbindungsstutzen (111) aufweist, wobei die Entlüftungsöffnung (135) insbesondere an einer Seitenwandung (137) des Verbindungsstutzens (111) gebildet ist.

5. Befüllkopf (100) nach Anspruch 4, wobei der Verbindungsstutzen (111) zumindest eine Längsrippe (139) aufweist, welche sich an einer Außenseite des Verbindungsstutzens (111) zumindest abschnittsweise entlang einer Längsachse (123) des Verbindungsstutzens (111) erstreckt, und wobei die zumindest eine Entlüftungsöffnung (135) in der Längsrippe (139) gebildet ist.

6. Befüllkopf (100) nach einem der vorangehenden Ansprüche, wobei das Dichtungslabyrinth (129) mit der Dichtungsaufnahme (127) formschlüssig, verbunden ist, um eine fluidtechnische Abdichtung zwischen dem Verbindungsstutzen (111) und dem zweiten Gehäuseteil (103-2) sicherzustellen.

7. Befüllkopf (100) nach Anspruch 6, wobei zwischen dem Dichtungsvorsprung (129) und der Dichtungsaufnahme (127) zumindest ein Dichtungselement (131) angeordnet ist, wobei das Dichtungselement (131) insbesondere einen O-Ring und/oder Dichtungslamellen umfasst.

8. Befüllkopf (100) nach einem der vorangehenden Ansprüche, wobei das erste Gehäuseteil (103-1) oder das zweite Gehäuseteil (103-2) einen Einführabschnitt (105) aufweist, welcher in einen Aufnahmeabschnitt (107) des zweiten Gehäuseteils (103-2) oder des ersten Gehäuseteils (103-1) einführbar ist, um das erste Gehäuseteil (103-1) und das zweite Gehäuseteil (103-2) miteinander zu verbinden.

9. Befüllkopf (100) nach einem der vorangehenden Ansprüche, wobei der Verbindungsstutzen (111) als ein Hohlzylinder oder ein Hohlkonus gebildet ist.

10. Befüllkopf (100) nach einem der vorangehenden Ansprüche, wobei der Befüllkopf (100) einen Ringmagneten (113) umfasst, welcher ausgebildet ist, eine Zapfventilautomatik des Zapfventils freizugeben, und wobei der Ringmagnet (113) insbesondere aus einem magnetischen Kunststoffmaterial oder einem magnetischen Metall, wie z.B. Neodym oder Eisen, gebildet ist.

11. Befüllkopf (100) nach Anspruch 10, wobei der Ringmagnet (113) zwischen dem ersten Gehäuseteil (103-1) und dem Verbindungsstutzen (111) angeordnet ist, wobei der Ringmagnet (113) eine Magnetöffnung aufweist, wobei das Zapfventil durch die Magnetöffnung in die Aufnahme (119) des Verbindungsstutzens (111) einführbar ist, und wobei der Ringmagnet (113) insbesondere als ein in Richtung des ersten Gehäuseteils (103-1) konisch zulaufender Ringmagnet (113) ausgebildet ist.

12. Befüllkopf (100) nach Anspruch 10 oder 11, wobei der Befüllkopf (100) einen Dichtungsring (115) aufweist, wobei der Dichtungsring (115) zwischen dem Ringmagneten (113) und dem ersten Gehäuseteil (103-1) angeordnet ist, wobei der Dichtungsring (115) eine Dichtungsöffnung aufweist, und wobei das Zapfventil durch die Dichtungsöffnung in die Aufnahme (119) des Verbindungsstutzens (111) einführbar ist.

13. Befüllkopf (100) nach einem der Ansprüche 10 bis 12, wobei an einer dem ersten Gehäuseteil (103-1) zugewandten Seite des Verbindungsstutzens (111) ein Befestigungsabschnitt (112) gebildet ist, wobei der Befestigungsabschnitt (112) geformt ist, den Ringmagneten (113) zwischen dem Verbindungsstutzen (111) und dem ersten Gehäuseteil (103-1) zu befestigen.

14. Befüllkopf (100) nach Anspruch 13, wobei der Befestigungsabschnitt (112) eine umlaufende Auflagefläche (114) aufweist, welche an einer Unterseite des Ringmagneten (113) anliegt.

15. Befüllkopf (100) nach einem der vorangehenden Ansprüche, wobei an einer Außenseite des Verbindungsstutzens (111) ein flächiges Element (141), insbesondere ein Schwallblech, gebildet ist, wobei das flächige Element (141) an dem ersten Gehäuseteil (103-1) anliegt, um den Verbindungsstutzen (111) an dem ersten Gehäuseteil (103-1) zu positionieren.

## Claims

1. Filling head (100) for a liquid tank in a vehicle, comprising:
a housing (103) which has a first housing part (103-1) and a second housing part (103-2), which housing parts are connected to each other, wherein
a receiving opening (117) is formed in the first housing part (103-1), wherein a pump nozzle for admitting liquid can be introduced into the receiving opening (117), and wherein an angled outlet stub (121) for discharging the supplied liquid into the liquid tank is formed in the second housing part (103-2); and
a connecting stub (111) for directing the liquid,
wherein the connecting stub (111) is arranged in the housing (103) between the first housing part (103-1) and the second housing part (103-2), wherein the connecting stub (111) has a receptacle (119) for receiving the pump nozzle, wherein the connecting stub (111) furthermore has an angled outlet portion (125) which is at least partially introduced into the angled outlet stub (121) of the second housing part (103-2),
wherein a sealing receptacle (127) is formed in the second housing part (103-2), wherein a sealing projection (129) is formed on an outer side of the connecting stub (111), wherein the sealing projection (129) is connectable to the sealing receptacle (127) in order to form a sealing labyrinth and in order to ensure fluidic sealing between the connecting stub (111) and the second housing part (103-2).

2. Filling head (100) according to Claim 1, wherein the second housing part (103-2) has a venting stub (133) for introducing air into an interior of the housing (103), wherein the venting stub (133) is configured in particular as an angled venting stub (133).

3. Filling head (100) according to Claim 1 or 2, wherein the angled venting stub (133), the angled outlet portion (125) and/or the angled outlet stub (121) extends in an angled manner in relation to a longitudinal axis (123) of the connecting stub (111) .

4. Filling head (100) according to one of the preceding claims, wherein the connecting stub (111) has at least one venting opening (135) for conducting air out of the connecting stub (111), wherein the venting opening (135) is formed in particular on a sidewall (137) of the connecting stub (111).

5. Filling head (100) according to Claim 4, wherein the connecting stub (111) has at least one longitudinal rib (139) which extends on an outer side of the connecting stub (111) at least in sections along a longitudinal axis (123) of the connecting stub (111), and wherein the at least one venting opening (135) is formed in the longitudinal rib (139).

6. Filling head (100) according to one of the preceding claims, wherein the sealing labyrinth (129) is connected to the sealing receptacle (127) in a form-fitting manner in order to ensure fluidic sealing between the connecting stub (111) and the second housing part (103-2).

7. Filling head (100) according to Claim 6, wherein at least one sealing element (131) is arranged between the sealing projection (129) and the sealing receptacle (127), wherein the sealing element (131) in particular comprises an O ring and/or sealing lamellas.

8. Filling head (100) according to one of the preceding claims, wherein the first housing part (103-1) or the second housing part (103-2) has an introducing portion (105) which can be introduced into a receiving portion (107) of the second housing part (103-2) or of the first housing part (103-1) in order to connect the first housing part (103-1) and the second housing part (103-2) to each other.

9. Filling head (100) according to one of the preceding claims, wherein the connecting stub (111) is formed as a hollow cylinder or a hollow cone.

10. Filling head (100) according to one of the preceding claims, wherein the filling head (100) comprises a ring magnet (113) which is configured to release an automatic pump nozzle mechanism of the pump nozzle, and wherein the ring magnet (113) is formed in particular from a magnetic plastics material or a magnetic metal, such as, for example, neodymium or iron.

11. Filling head (100) according to Claim 10, wherein the ring magnet (113) is arranged between the first housing part (103-1) and the connecting stub (111), wherein the ring magnet (113) has a magnet opening, wherein the pump nozzle can be introduced through the magnet opening into the receptacle (119) of the connecting stub (111), and wherein the ring magnet (113) is configured in particular as a ring magnet (113) which tapers conically in the direction of the first housing part (103-1).

12. Filling head (100) according to Claim 10 or 11, wherein the filling head (100) has a sealing ring (115), wherein the sealing ring (115) is arranged between the ring magnet (113) and the first housing part (103-1), wherein the sealing ring (115) has a sealing opening, and wherein the pump nozzle can be introduced through the sealing opening into the receptacle (119) of the connecting stub (111).

13. Filling head (100) according to one of Claims 10 to 12, wherein a fastening portion (112) is formed on a side of the connecting stub (111) that faces the first housing part (103-1), wherein the fastening portion (112) is shaped to fasten the ring magnet (113) between the connecting stub (111) and the first housing part (103-1).

14. Filling head (100) according to Claim 13, wherein the fastening portion (112) has an encircling supporting surface (114) which lies against a lower side of the ring magnet (113).

15. Filling head (100) according to one of the preceding claims, wherein a flat element (141), in particular a baffle plate, is formed on an outer side of the connecting stub (111), wherein the flat element (141) lies against the first housing part (103-1) in order to position the connecting stub (111) on the first housing part (103-1).

## Revendications

1. Tête de remplissage (100) pour un réservoir de liquide dans un véhicule, comprenant :
un boîtier (103) qui comprend une première partie de boîtier (103-1) et une deuxième partie de boîtier (103-2), lesquelles sont reliées l'une à l'autre, une ouverture de logement (117) étant formée dans la première partie de boîtier (103-1), un pistolet distributeur servant à l'admission de liquide pouvant être introduit dans l'ouverture de logement (117), et une tubulure de sortie coudée (121) pour la sortie du liquide acheminé dans le réservoir de liquide étant formée dans la deuxième partie de boîtier (103-2) ; et
une tubulure de raccordement (111) pour guider le liquide, la tubulure de raccordement (111) étant disposée dans le boîtier (103) entre la première partie de boîtier (103-1) et la deuxième partie de boîtier (103-2), la tubulure de raccordement (111) comprenant un logement (119) pour loger le pistolet distributeur, la tubulure de raccordement (111) comprenant en outre une partie de sortie coudée (125), laquelle est introduite au moins partiellement dans la tubulure de sortie coudée (121) de la deuxième partie de boîtier (103-2),
un logement d'étanchéité (127) étant formé dans la deuxième partie de boîtier (103-2), une saillie d'étanchéité (129) étant formée sur un côté extérieur de la tubulure de raccordement (111), la saillie d'étanchéité (129) pouvant être reliée au logement d'étanchéité (127) afin de former un labyrinthe d'étanchéité et d'assurer une étanchéité fluidique entre la tubulure de raccordement (111) et la deuxième partie de boîtier (103-2).

2. Tête de remplissage (100) selon la revendication 1, dans laquelle la deuxième partie de boîtier (103-2) comprend une tubulure d'aération (133) pour l'introduction d'air dans l'intérieur du boîtier (103), la tubulure d'aération (133) étant réalisée en particulier sous forme de tubulure d'aération coudée (133) .

3. Tête de remplissage (100) selon la revendication 1 ou 2, dans laquelle la tubulure d'aération coudée (133), la partie de sortie coudée (125) et/ou la tubulure de sortie coudée (121) s'étendent de manière coudée par rapport à un axe longitudinal (123) de la tubulure de raccordement (111).

4. Tête de remplissage (100) selon l'une des revendications précédentes, dans laquelle la tubulure de raccordement (111) comprend au moins une ouverture d'aération (135) pour l'évacuation d'air hors de la tubulure de raccordement (111), dans laquelle l'ouverture d'aération (135) est formée en particulier sur une paroi latérale (137) de la tubulure de raccordement (111).

5. Tête de remplissage (100) selon la revendication 4, dans laquelle la tubulure de raccordement (111) comprend au moins une nervure longitudinale (139), laquelle s'étend sur un côté extérieur de la tubulure de raccordement (111) au moins dans certaines régions le long d'un axe longitudinal (123) de la tubulure de raccordement (111), et dans laquelle l'au moins une ouverture d'aération (135) est formée dans la nervure longitudinale (139).

6. Tête de remplissage (100) selon l'une des revendications précédentes, dans laquelle le labyrinthe d'étanchéité (129) est relié par complémentarité de forme au logement d'étanchéité (127), afin d'assurer une étanchéité fluidique entre la tubulure de raccordement (111) et la deuxième partie de boîtier (103-2).

7. Tête de remplissage (100) selon la revendication 6, dans laquelle au moins un élément d'étanchéité (131) est disposé entre la saillie d'étanchéité (129) et le logement d'étanchéité (127), dans laquelle l'élément d'étanchéité (131) comportent en particulier un joint torique et/ou des lamelles d'étanchéité.

8. Tête de remplissage (100) selon l'une des revendications précédentes, dans laquelle la première partie de boîtier (103-1) ou la deuxième partie de boîtier (103-2) comprend une partie d'introduction (105), laquelle peut être introduite dans une partie de logement (107) de la deuxième partie de boîtier (103-2) ou de la première partie de boîtier (103-1) afin de relier la première partie de boîtier (103-1) et la deuxième partie de boîtier (103-2) l'une à l'autre.

9. Tête de remplissage (100) selon l'une des revendications précédentes, dans laquelle la tubulure de raccordement (111) est formée en tant que cylindre creux ou cône creux.

10. Tête de remplissage (100) selon l'une des revendications précédentes, dans laquelle la tête de remplissage (100) comporte un aimant annulaire (113), lequel est réalisé pour libérer un dispositif automatique du pistolet distributeur, et dans laquelle l'aimant annulaire (113) est formé en particulier à partir d'une matière synthétique magnétique ou d'un métal magnétique tel que le néodyme ou le fer.

11. Tête de remplissage (100) selon la revendication 10, dans laquelle l'aimant annulaire (113) est disposé entre la première partie de boîtier (103-1) et la tubulure de raccordement (111), dans laquelle l'aimant annulaire (113) comprend une ouverture d'aimant, dans laquelle le pistolet distributeur peut être introduit à travers l'ouverture d'aimant dans le logement (119) de la tubulure de raccordement (111), et dans laquelle l'aimant annulaire (113) est réalisé en particulier sous forme d'aimant annulaire (113) se terminant de manière conique en direction de la première partie de boîtier (103-1).

12. Tête de remplissage (100) selon la revendication 10 ou 11, dans laquelle la tête de remplissage (100) comprend une bague d'étanchéité (115), dans laquelle la bague d'étanchéité (115) est disposée entre l'aimant annulaire (113) et la première partie de boîtier (103-1), dans laquelle la bague d'étanchéité (115) comprend une ouverture d'étanchéité, et dans laquelle le pistolet distributeur peut être introduit à travers l'ouverture d'étanchéité dans le logement (119) de la tubulure de raccordement (111).

13. Tête de remplissage (100) selon l'une des revendications 10 à 12, dans laquelle une partie de fixation (112) est formée sur un côté de la tubulure de raccordement (111) tourné vers la première partie de boîtier (103-1), dans laquelle la partie de fixation (112) est façonnée pour fixer l'aimant annulaire (113) entre la tubulure de raccordement (111) et la première partie de boîtier (103-1).

14. Tête de remplissage (100) selon la revendication 13, dans laquelle la partie de fixation (112) comprend une surface d'appui périphérique (114), laquelle s'appuie contre un côté inférieur de l'aimant annulaire (113).

15. Tête de remplissage (100) selon l'une des revendications précédentes, dans laquelle un élément plan (141), en particulier une tôle brise-flots, est formé sur un côté extérieur de la tubulure de raccordement (111), dans laquelle l'élément plan (141) s'appuie contre la première partie de boîtier (103-1) afin de positionner la tubulure de raccordement (111) sur la première partie de boîtier (103-1).
